(19) Europäisches Patentamt

European Patent Office

Office européen des brevets

(11) **EP 0 793 124 B1**

(12) **FASCICULE DE BREVET EUROPEEN**

(45) Date de publication et mention
de la délivrance du brevet:
**01.12.2004 Bulletin 2004/49**

(51) Int Cl.⁷: **G02B 6/293**, G02B 6/14

(21) Numéro de dépôt: **97400405.3**

(22) Date de dépôt: **24.02.1997**

(54) **Filtre obtenu par inscription d'un réseau de Bragg dans une fibre optique**

Ein durch Einschreiben eines Bragg-Gitters in eine optische Faser hergestelltes Filter

Filter obtained by inscription of a Bragg grating into an optical fibre

(84) Etats contractants désignés:
**DE DK ES FI GB IT NL SE**

(30) Priorité: **01.03.1996 FR 9602620**

(43) Date de publication de la demande:
**03.09.1997 Bulletin 1997/36**

(73) Titulaire: **Avanex Corporation
Fremont, CA 94538 (US)**

(72) Inventeurs:
 • **Bakhti, Fatima
 91120 Palaiseau (FR)**
 • **Sansonetti, Pierre
 91120 Palaiseau (FR)**
 • **Riant, Isabelle
 91120 Palaiseau (FR)**
 • **Gonthier, François
 Montreal (Québec) H2M 2L7 (CA)**

(74) Mandataire: **Haines, Miles John et al
D Young & Co
120 Holborn
London EC1N 2DY (GB)**

(56) Documents cités:
 **EP-A- 0 211 582         WO-A-91/10148
 CA-A- 1 149 209**

 • **OPTICS LETTERS, vol. 17, no. 23, 1 Décembre
 1992, pages 1655-1657, XP000321008
 CHAO-XIANG SHI ET AL: "MODE CONVERSION
 BASED ON THE PERIODIC COUPLING BY A
 REFLECTIVE FIBER GRATING"**
 • **ELECTRONICS LETTERS, vol. 27, no. 8, 11 Avril
 1991, pages 682-684, XP000212253 BILODEAU F
 ET AL: "EFFICIENT, NARROWBAND LP01 LP02
 MODE CONVERTORS FABRICATED IN
 PHOTOSENSITIVE FIBRE: SPECTRAL
 RESPONSE"**
 • **ELECTRONICS LETTERS, vol. 31, no. 10, 11 Mai
 1995, pages 820-822, XP000518311 HEWLETT S
 J ET AL: "CLADDING-MODE COUPLING
 CHARACTERISTICS OF BRAGG GRATINGS IN
 DEPRESSED-CLADDING FIBRE"**

## Description

La présente invention concerne de manière générale des filtres optiques. Plus particulièrement, l'invention a trait à des filtres réjecteur et passe-bande.

Comme cela apparaîtra plus clairement dans la suite de la description, il est utilisé pour la mise en oeuvre de l'invention, au moins un réseau photoréfractif, ou réseau de Bragg, inscrit dans une fibre optique. L'inscription d'un réseau de Bragg dans une fibre optique recourt au principe fondamental de variation de l'indice de réfraction du coeur de la fibre, typiquement dopé au germanium, par illumination à l'U.V. tel que décrit dans le brevet américain US-A-4 474 427. Pour cette inscription, peut être utilisée à titre d'exemple, selon la technique antérieure, ou bien une technique d'holographie rappelée dans le document US-A-4 725 110, ou bien une technique point par point décrite dans le brevet US-A-5 104 209, ou encore une technique à masque de phase divulguée dans le US-A-5 367 588.

Le document intitulé "Long period fiber gratings as band-rejection filters" de A.M. VENGSARKAR et al, paru dans OFC'95, PD4, (1995) décrit un filtre optique réjecteur sous la forme d'un réseau de Bragg à pas long, de l'ordre de la centaine de μm, inscrit dans une fibre optique localement dépourvue de son revêtement. Le pas du réseau est choisi de sorte que le mode fondamental guidé dans le coeur de la fibre se couple, à une longueur d'onde donnée, avec un mode de gaine qui s'atténue ensuite rapidement au fur et à mesure de sa propagation dans la gaine en raison des fuites à l'interface gaine-revêtement. Le couplage se produisant à une longueur d'onde donnée, fonction du pas du réseau, le réseau de Bragg inscrit dans la fibre se comporte donc comme un filtre en réjection.

L'inconvénient principal de la réalisation décrite dans ce document est un couplage imparfait entre modes de coeur et de gaine, qui résulte de la faible section du coeur de la fibre, d'une sensibilité à la longueur d'onde de Bragg a priori cinq fois plus élevée que la sensibilité dans un réseau de Bragg à pas court conventionnel, et de la présence de plusieurs modes de gaine.

L'invention vise à remédier à cet inconvénient en fournissant un filtre optique réjecteur formé par inscription d'au moins un réseau de Bragg à pas long dans une fibre optique, qui se caractérise en ce que

la fibre optique, initialement monomode, est effilée pour définir deux zones de transition sensiblement adiabatiques délimitant une zone intermédiaire dans laquelle deux modes peuvent être guidés, et

en ce que ledit réseau de Bragg à pas long est inscrit dans ladite zone intermédiaire pour produire un couplage codirectionnel entre les deux modes guidés, de coeur et de gaine, à une longueur d'onde qui est fonction du pas dudit réseau.

L'invention fournit également un filtre optique passe-bande qui se distingue du filtre rejecteur présenté ci-dessus en ce qu'il comprend, en outre, un second réseau de Bragg qui est inscrit dans celle desdites deux zones de transition qui est disposée à l'entrée de réception d'un signal optique.

D'autres caractéristiques et avantages de la présente invention apparaîtront plus clairement à la lecture de la description suivante, en référence aux dessins annexés correspondants, dans lesquels :

- la figure 1 montre sous forme schématique un filtre réjecteur selon l'invention sous la forme d'un réseau de Bragg inscrit dans une fibre optique effilée, ainsi que les différents modes se propageant dans la fibre;
- la figure 2 montre sous forme schématique un filtre passe-bande selon l'invention sous la forme de deux réseaux de Bragg inscrits dans une fibre optique, initialement monomode, qui est effilée, ainsi que les différents modes se propageant dans la fibre; et
- les figures 3 et 4 montrent deux spectres en transmission respectivement obtenus avec les filtres réjecteur et passe-bande illustrés dans les figures 1 et 2.

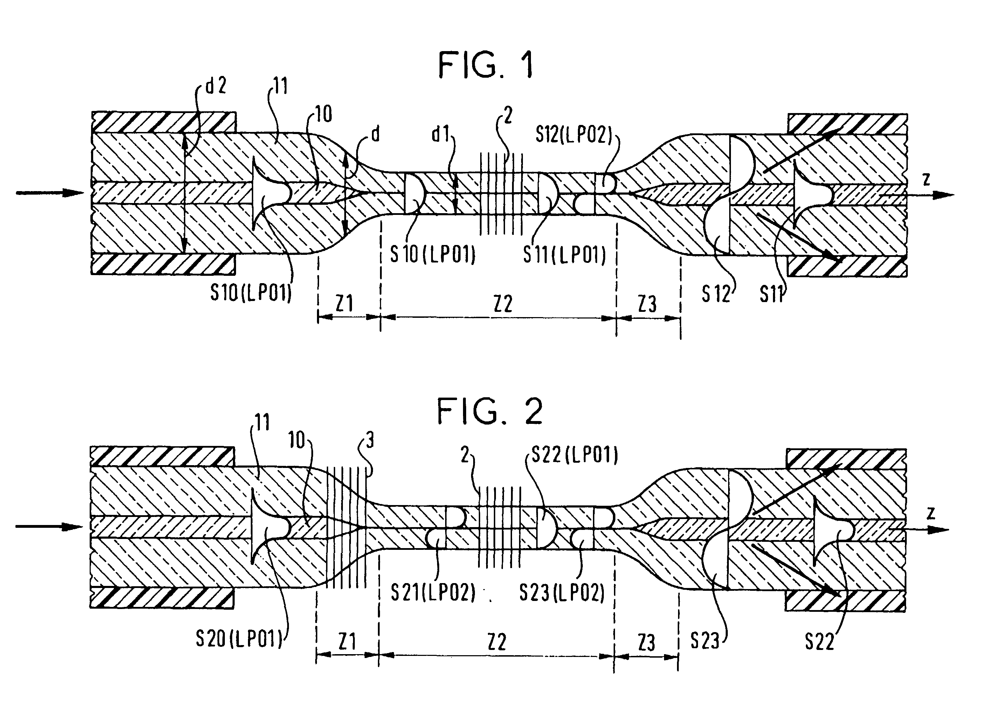

En référence à la figure 1, il est représenté une fibre optique effilée, portée par un axe orienté z, pour la réalisation de filtres selon l'invention. Une telle fibre optique effilée est par exemple obtenue par fusion et étirement d'une fibre optique unimodale comprenant un coeur 10 et une gaine 11 tel que cela est décrit dans l'article intitulé "Filtrage spectral par fibres unimodales effilées-Application aux coupleurs WDM", de Jacques Bures et al. publié dans " OPTO'89, pp 75-78, Esi-Publi". En résultat des chauffage et étirement de la fibre, l'on fait varier son diamètre jusqu'à définir trois zones successives Z1, Z2 et Z3, à savoir deux zones de transition Z1 et Z3 et une zone intermédiaire Z2, les deux zones de transition Z1 et Z3 encadrant la zone intermédiaire Z2. La zone de transition Z1 est telle que le diamètre d de la fibre varie en décroissant en fonction de z à partir d'un diamètre égal au diamètre d2 de la fibre jusqu'à un diamètre égal à un diamètre minimal d1. La zone intermédiaire Z2 possède sur toute sa longueur le diamètre minimal d1. La seconde zone de transition Z3 est telle que le diamètre de la fibre varie en croissant en fonction de z à partir d'un diamètre égal au diamètre minimal d1 jusqu'au diamètre d2 de la fibre. Le diamètre du coeur 10 de la fibre varie en conséquence pour posséder un diamètre quasiment nul dans la zone intermédiaire Z2. La pente de variation du diamètre d de la fibre en fonction de z dans les zones de transition Z1 et Z3 est suffisamment faible pour satisfaire au critère d'adiabaticité, tel que cela est expliqué dans l'article précité ainsi que dans le document intitulé "Tapered single-mode fibres and devices" de J.D LOVE et al. paru dans "IEE Proceedings-J, vol.138, N°5, Octobre 1991". Une région est dite adiabatique si les couplages entre modes, dûs à la pente de la fibre, sont faibles ou négligeables. Autrement dit, un mode de coeur, noté LP01, se propageant dans la fibre monomode continue de se propager sous la forme d'un mode LP01 après passage à travers la zone Z1, sans donner naissance à un quelconque autre mode.

Selon l'invention, il est prévu pour la réalisation d'un **filtre réjecteur** d'inscrire un réseau de Bragg à pas long 2 dans la zone intermédiaire Z2 de la fibre effilée. Il est supposé que cette zone intermédiaire Z2 est susceptible de faire l'objet d'une inscription d'un réseau de Bragg, en prévoyant par exemple un dopage Germanium de la gaine 11. Le réseau de Bragg à pas long est du type décrit dans l'article précité "Long period fiber gratings as band-rejection filters" de A.M. VENGSARKAR et al, paru dans OFC'95, PD4, (1995).

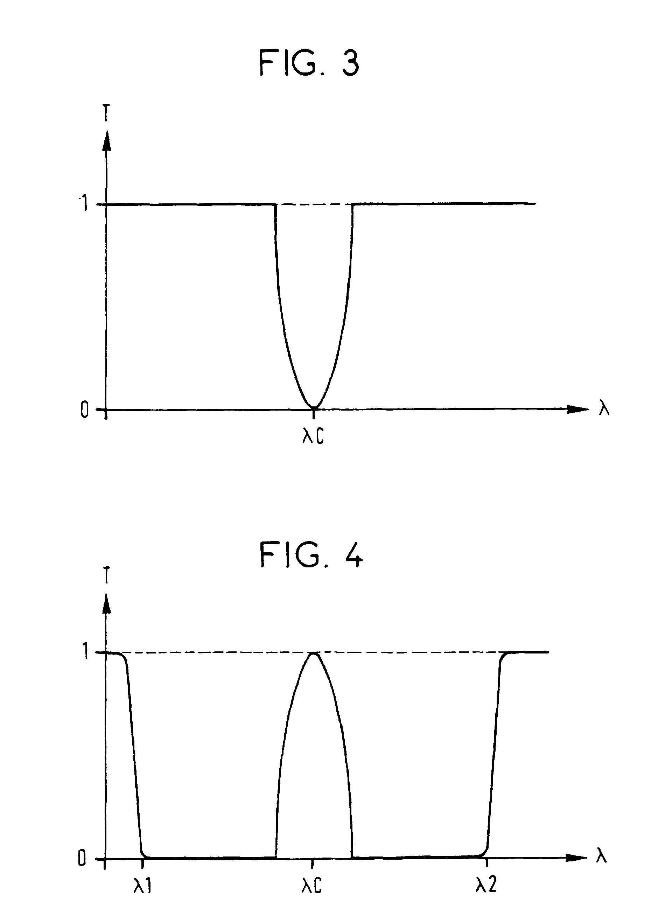

Les phénomènes optiques s'appliquant à la réalisation décrite ici sont les suivants. Dans la figure 1, il est supposé que le signal optique entrant S10 se propage dans le sens des z croissants dans la fibre monomode. La partie effilée Z1-Z2-Z3 de la fibre reçoit ce signal optique entrant S10 se propageant en mode LP01, ou mode de coeur, et possédant une répartition spatiale de type gaussien. Le signal optique S10 de mode LP01 traverse la zone de transition adiabatique Z1 sans donner naissance à d'autres modes. Il continue donc à se propager dans la zone intermédiaire Z2 suivant ce mode LP01, non pas dans le coeur 10 de la fibre, mais dans sa gaine 11, le coeur étant sensiblement inexistant dans la zone intermédiaire Z2. Le réseau de Bragg à pas long 2 introduit un couplage codirectionnel entre le mode LP01 et un mode LP02 guidé dans la zone Z2, à une longueur d'onde qui est fonction du pas du réseau 2. La zone intermédiaire Z2 possédant un diamètre plus grand que le diamètre du coeur 10, il en résulte un couplage plus efficace que celui obtenu dans un coeur de fibre lorsque le réseau à pas long est inscrit dans une fibre optique non effilée. Ce couplage donne naissance à un signal S11 de mode LP01, directement issu du signal S10, et à un signal S12 de mode LP02 qui véhicule la puissance du signal optique incident aux longueurs d'onde de couplage. Comme représenté par les deux flèches à droite de la figure 1, après passage dans la zone Z3, le signal S12 de mode LP02 va s'atténuer au fur et à mesure de la distance parcourue par fuite à l'interface gaine-revêtement dans la partie de fibre monomode. Seul le signal S11 de mode LP01 se propage durablement dans le coeur de la fibre, en présentant une bande de réjection centrée sur la longueur d'onde de couplage λC qui est fonction du pas du réseau 2, tel que cela est représenté dans la figure 3. En pratique, le pas A du réseau doit satisfaire la relation d'accord de phase donnée par:

$$\beta_1 - \beta_2 = 2.\pi/\Lambda,$$

où $\beta_1$ et $\beta_2$ désignent les constantes de propagation respectives des modes LP01 et LP02. Les valeurs

des constantes $\beta_1$ et $\beta_2$ étant relativement proches, il est obtenu un pas $\Lambda$ relativement long, de l'ordre de plusieurs centaines de μm pour des longueurs d'onde de l'ordre du μm.

En référence à la figure 2, un **filtre passe-bande** selon l'invention diffère du filtre réjecteur présenté dans la figure 1 en ce qu'il comprend, en outre, un second réseau de Bragg 3 inscrit dans la zone de transition Z1 qui est disposée à l'entrée de réception du signal optique S20.

Le réseau de Bragg additionnel 3 est inscrit dans la zone de transition Z1 de la fibre qui est disposée à l'entrée de réception de signal optique. L'indice effectif $n_{eff}$ de la fibre dans cette zone Z1 décroît en fonction de z. L'inscription du réseau dans une telle zone Z1 entraîne donc un couplage entre modes LP01 et LP02 sur une grande largeur de bande. En résultat, un signal optique entrant S20 de mode LP01 se couple avec un signal optique S21 de mode LP02 sensiblement pour toute la largeur de bande du signal optique entrant. Le couplage se produisant sur une très large bande, l'on peut estimer que seul le signal S21 de mode LP02 est délivré en sortie du réseau 3.

Dans la zone Z2, le réseau de Bragg à pas long 2 reçoit le signal S21 de mode LP02 et introduit un couplage codirectionnel entre ce mode LP02 et un mode LP01, à une longueur d'onde qui est fonction du pas du réseau 2. Ce couplage donne naissance à un signal S23 de mode LP02, issu directement du signal S21, et à un signal S22 de mode LP01 qui véhicule la puissance du signal optique entrant S20 aux longueurs d'onde de couplage. Comme représenté par les deux flèches à droite de la figure 2, le signal S23 de mode LP02 s'atténue au fur et à mesure de la distance parcourue par fuite à l'interface gaine-revêtement, dans la partie monomode de la fibre. Seul le signal S22 de mode LP01 continue donc à se propager dans le coeur de la fibre, en présentant une bande passante centrée sur la longueur d'onde de couplage, qui est fonction du pas du réseau 2, tel que cela est représenté dans la figure 4. La bande de réjection [λ1, λ2] dans la figure 4 correspond à la largeur spectrale du réseau 3.

**Revendications**

1. Filtre optique formé par inscription d'au moins un réseau de Bragg à pas long (2) dans une fibre optique, **caractérisé en ce que**

    ladite fibre optique est effilée pour définir deux zones de transition (Z1, Z3) sensiblement adiabatiques délimitant une zone intermédiaire (Z2), et
    **en ce que** ledit réseau de Bragg à pas long (2) est inscrit dans ladite zone intermédiaire (Z2) pour produire un couplage codirectionnel entre deux modes guidés (LP01, LP02) dans ladite zone intermédiaire (Z2) à une longueur d'onde qui est fonction du pas dudit réseau (2).

**2.** Filtre optique conforme à la revendication 1, **caractérisé par** un second réseau de Bragg (3) qui est inscrit dans celle (Z1) desdites deux zones de transition (Z1, Z3) qui est disposée à l'entrée de réception d'un signal optique.

**Claims**

**1.** Optical filter formed by inscription of at least one long period Bragg grating (2) into a optical fibre, **characterized in that**

said optical fibre is thinned out in order to define two transition zones (Z1, Z3) approximately adiabatic, delimiting an intermediate zone (Z2), and

**in that** said long pitch Bragg grating (2) is inscribed into said intermediate zone (Z2) in order to produce a codirectional coupling between two bound modes (LP01, LP02) in said intermediate zone (Z2) at a wavelength which is a function of the period of said grating (2).

**2.** Optical filter according to claim 1, **characterized by** a second Bragg grating (3) which is inscribed into that (Z1) of said two transition zones (Z1, Z3) which is arranged at the reception input of an optical signal.

**Patentansprüche**

**1.** Optisches Filter, das durch Einschreiben mindestens eines Bragg-Gitters mit langer Periode (2) in eine optische Faser gebildet ist, **dadurch gekennzeichnet, daß**

die optische Faser verjüngt ist, um zwei im wesentlichen adiabatische Übergangszonen (Z1, Z3) zu bestimmen, welche eine Zwischenzone (Z2) begrenzen, und

das Bragg-Gitter mit langer Periode (2) in die Zwischenzone (Z2) eingeschrieben ist, um eine kodirektionale Kopplung zwischen zwei geführten Moden (LPO1, LPO2) in der Zwischenzone (Z2) bei einer Wellenlänge zu bilden, die eine Funktion der Periode des Gitters (2) ist.

**2.** Optisches Filter nach Anspruch 1, **gekennzeichnet durch** ein zweites Bragg-Gitter (3), das in diejenige (Z1) der zwei Übergangszonen (Z1, Z3) eingeschrieben ist, die am Aufnahmeeingang eines optischen Signals angeordnet ist.

FIG. 1

FIG. 2

# FIG. 3

# FIG. 4